## Europäisches Patentamt
## European Patent Office
## Office européen des brevets

(19)

(11) Veröffentlichungsnummer: **0 104 521**
**B1**

(12) **EUROPÄISCHE PATENTSCHRIFT**

(45) Veröffentlichungstag der Patentschrift:
13.01.88

(51) Int. Cl.⁴: **G 21 C 3/62**

(21) Anmeldenummer: 83109924.8

(22) Anmeldetag: 09.09.83

(54) Verfahren zur Herstellung keramischer Brennstofftabletten.

(30) Priorität: 23.09.82 DE 3235207

(43) Veröffentlichungstag der Anmeldung:
04.04.84 Patentblatt 84/14

(45) Bekanntmachung des Hinweises auf die Patenterteilung:
13.01.88 Patentblatt 88/2

(84) Benannte Vertragsstaaten:
BE DE FR GB IT NL SE

(56) Entgegenhaltungen:
DE-A-2 921 146
FR-A-2 344 929
FR-A-2 437 678

(73) Patentinhaber: Nukem GmbH, Rodenbacher Chaussee 6 Postfach 11 00 80, D-6450 Hanau 11 (DE)
Patentinhaber: Kernforschungszentrum Karlsruhe GmbH, Weberstrasse 5 Postfach 3640, D-7500 Karlsruhe 1 (DE)

(72) Erfinder: Hrovat, Milan, Dr. Dipl.- Ing., Meisenweg 7, D-6458 Rodenbach 2 (DE)
Erfinder: Huschka, Hans, Dr. Dipl.- Chem., Grünaustrasse 7, D-6450 Hanau 9 (DE)
Erfinder: Rachor, Lothar, Seligenstädterstrasse 79, D-6450 Hanau 8 (DE)
Erfinder: Vollath, Dieter, Dr., Dipl.- Phys., Primelweg 3, D-7513 Stutensee 3 (DE)

(74) Vertreter: Nowak, Gerhard, DEGUSSA AG Fachbereich Patente Rodenbacher Chaussee Postfach 1345, D-6450 Hanau 1 (DE)

## Beschreibung

Die Erfindung betrifft ein Verfahren zur Herstellung keramischer Brennstofftabletten, die den Spalt- und/oder Brutstoff in oxidischer Form enthalten, durch Erhitzen entsprechender Rohpreßlinge auf Temperaturen unterhalb 2500° C, rasche Überführung in ein Stahlgesenk, schlagartige Verdichtung bei einem Preßdruck kleiner als 1000 MN/m$^2$ innerhalb weniger Millisekunden, Ausstoßen der Tabletten und Abkühlung.

Die Brennelemente für Leichtwasser- (LWR) und schnelle natriumgekühlte Reaktoren (SNR) enthalten den Brenn- und/oder Brutstoff überwiegend in Form von Tabletten aus Uranoxid oder aus einer Mischung von Uranoxid und Plutoniumoxid. Der Spaltstoff Plutonium wird vorwiegend in SNR-Reaktoren verwendet, in beschränkter Menge wird er aber auch in den LWR-Reaktoren anstelle von $^{235}$U eingesetzt.

Die Brennstofftabletten werden gewöhnlich aus Uranoxidpulver (UO$_2$) oder aus gemischten Pulveroxiden UO$_2$ und PuO$_2$ durch Pressen, Sintern und Schleifen hergestellt. Diese Preß-Sinterverfahren haben eine Reihe von Nachteilen. Die geometrische Dichte der Brennstofftabletten nach dem Pressen ist gering und durch den vom Werkzeug her maximal zulässigen Preßdruck von 500 bis 1000 MN/m$^2$ auf weniger als 70 % theoretischer Dichte begrenzt. Folglich ist eine aufwendige Nachverdichtung durch Sintern erforderlich. Um die Qualität der gesinterten Tabletten reproduzierbar sicherzustellen, werden an das Preßpulver hohe Anforderungen bezüglich der Reinheit und Sinterfähigkeit gestellt, die sich nur mit aufwendigen Konversionsverfahren bei der Herstellung von UO$_2$ - bzw. UO$_2$/PuO$_2$-Preßpulvern erfüllen lassen (z. B. DE-C-15 92 468, DE-B-15 92 477 oder DE-A-26 23 977). Hinzu kommt, daß die verwendeten Pressen und die etwa 13 m langen Sinteröfen einen großen Raumbedarf haben.

Insbesondere bei der Verarbeitung von plutoniumhaltigem Brennstoff ist das Einboxen von großen Geräten aufwendig und mit hohen Instandhaltungs-, Wartungs- und Betriebskosten verbunden.

Die Durchmessertoleranzen der Brennstofftabletten betragen ± 25μm. Um sie einzuhalten, müssen alle Tabletten nach dem Sintern auf Sollmaß geschliffen werden. Die Gewichtsabnahme beim Schleifen beträgt 2 bis 4 %. Außerdem läßt sich ein Ausschuß von etwa 10 % durch Abbrechen von Kanten und durch Abplatzungen nicht vermeiden.

Die Aufarbeitung vor allem des plutoniumhaltigen Schleifschlammes erweist sich als äußerst schwierig und ist mit einem sehr hohen Aufwand verbunden.

Die gesinterten Brennstofftabletten neigen im Reaktor häufig zum Nachsintern. Die damit verbundene Nachverdichtung trägt dazu bei, daß der wärmehemmende Spalt zwischen den Tabletten und dem Hüllrohr vergrößert und somit der Wärmeübergang verschlechtert wird. Ferner wird die Reaktivität im Reaktorkern als Folge erhöhter Temperatur ungünstig beeinflußt.

Außer der Fertigung der Brennstofftabletten nach dem Preß-Sinterverfahren wurde versucht, die Brennstofftabletten durch Heißpressen zu erzeugen. Bei den erforderlichen Temperaturen von mehr als 1300° C konnten jedoch die Werkstoffprobleme für Matrize und Stempel wirtschaftlich noch nicht gelöst werden. Die dabei erzielbaren Maßtoleranzen erfordern trotzdem eine aufwendige Nachbearbeitung. Daher hat dieses Verfahren keine technische Bedeutung erlangt.

Um die Werkstoffprobleme, bedingt durch das Pressen bei hoher Temperatur und hohem Druck, zu lösen, wurde die Fertigung der Brennstofftabletten nach einem Heißschlagverdichtungsverfahren (HSV-Verfahren) vorgeschlagen (DE-C-28 42 402). Beim HSV-Verfahren wird ein hantierfester Tablettenrohling auf Temperaturen oberhalb 1300° C erhitzt und in einem kalten Gesenk so schnell verdichtet und geformt, daß kein nennenswerter Wärmeaustausch zwischen Preßling und Werkzeug stattfinden kann. Wesentliches Verfahrensmerkmal ist, daß Wärme und Druck - im Gegensatz zu anderen Heißpreßverfahren- weitgehend entkoppelt sind und nur sehr kurze Zeit (etwa eine Millisekunde) gemeinsam auf den Preßling einwirken.

Dadurch werden alle Wechselwirkungen zwischen Preßling und Werkzeug vermieden oder behindertr die eine gewisse Zeit benötigen. Der Preßling verläßt das Gesenk noch im plastischen Temperaturbereich, muß jedoch die erforderliche Formstabilität besitzen, um die dynamische Beanspruchung des Ausstoßvorganges unbeschädigt zu überstehen. Die Druckbelastung als Folge der Gaskomprimierung beim Verdichten der porösen Tabletten erweist sich bei diesem Verfahren als äußerst wichtig. Um sie zu vermeiden, ist es erforderlich, das Erhitzen, Verdichten und Ausstoßen der Tabletten im Vakuum durchzuführen. Nach diesem Verfahren lassen sich karbidische Brennstofftabletten (UC und UC/PuC) problemlos herstellen.

Demgegenüber traten bei der Herstellung von oxidischen Brennstofftabletten eine Reihe von Schwierigkeiten auf. Die beiden Oxide UO$_2$ und PuO$_2$ weisen unter gleichen Bedingungen gegenüber Uran- und Plutonium-Karbid einen um etwa den Faktor 500 höheren Dampfdruck auf. Daher treten im Vakuum so hohe Verdampfungsraten auf, daß eine technische Anwendung des HSV-Verfahrens nicht ohne weiteres möglich ist. Da außerdem der Dampfdruck von PuO$_2$ gegenüber dem von UO$_2$ wesentlich höher liegt, kann bei relativ hoher Verdampfungsgeschwindigkeit eine selektive Anreicherung der PuO$_2$-Komponente in der Dampfphase - und somit eine Entmischung von Uran und Plutonium in der Tablette - auftreten. Die verdampften Oxide schlagen sich an den kälteren Stellen im Aufheizofen nieder und behindern den Tablettentransport.

Weiterhin führt die relativ hohe Thermoschockempfindlichkeit von oxidischem Brennstoff beim Aufheizen und Abkühlen zu zahlreichen Schwindrissen im Tabletteninneren.

Der Erfindung lag daher die Aufgabe zugrunde, ein Verfahren zur Herstellung von keramischen Brennstofftabletten zu finden, die den Spalt- und/oder Brutstoff in oxidischer Form enthalten, durch Erhitzen entsprechender Rohpreßlinge auf Temperaturen unterhalb 2500°C, rasche Überführung in ein Stahlgesenk, schlagartige Verdichtung bei einem Preßdruck kleiner als 1000 $MN/m^2$ innerhalb weniger Millisekunden, Ausstoßen der Tabletten und Abkühlung, bei dem keine Entmischung und Niederschlagung verdampfter Oxide im Ofen stattfindet und vor allem keine Schwindrisse im Tabletteninnern auftreten.

Diese Aufgabe wurde erfindungsgemäß dadurch gelöst, daß das Aufheizen, Verdichten, Ausstoßen und Abkühlen in reduzierender Atmosphäre erfolgt und das Aufheizen und Abkühlen stufenweise durchgeführt wird, wobei die Aufheiz- und Abkühlgeschwindigkeit unterhalb 1200°C kleiner als 30°C/Sekunde und oberhalb 1200°C größer als 30°C/Sekunde ist.

Vorzugsweise beträgt der Gasdruck der reduzierenden Atmosphäre 10 bis 1000 mbar, wobei ein Druck von etwa 950 mbar sich am besten bewährt hat. Vorteilhafterweise verwendet man ein Inertgas-Wasserstoff-Gemisch, insbesondere Helium mit 4 bis 10 Vol % Wasserstoff.

Entscheidend bei diesem Verfahren ist es, daß einerseits die Verdampfung der Oxide in reduzierender Atmosphäre im Bereich von 10 bis 1000 mbar nahezu vollständig unterdrückt wird, und daß andererseits beim stufenweisen Aufheizen die im porösen Tablettenrohling enthaltene Luft mit steigender Temperatur bis zu etwa 80 % (bezogen auf die Normalbedingungen bei Raumtemperatur) entweichen kann. Durch extrem kleine Verdampfungsverluste beim Aufheizen und durch die Möglichkeit, die Druckbelastung beim Verdichten der Tabletten so weit herabzusetzen, daß die Preßlinge den Ausstoßvorgang unbeschädigt überstehen, wurden durch das erfindungsgemäße Verfahren die Voraussetzungen zur wirtschaftlichen Fertigung von oxidischen Brennstofftabletten geschaffen, ohne daß Schwindrisse im Tabletteninnern auftreten. Um die Gasentweichung trotz einer relativ raschen Aufheizgeschwindigkeit zu vervollständigen, ist es meist vorteilhaft, beim Pressen der Tablettenrohlinge ein Pulver mit möglichst kleiner Sinteraktivität zu verwenden. Die mit einem solchen Pulver hergestellten Tabletten sind gasdurchlässig und neigen zu keinen Porenstrukturänderungen während des Aufheizens. Sie sind weitgehend dimensionsstabil. Gemahlener Sinterschrott und ein durch thermische Zersetzung von Uranylnitrat bzw. Uranylnitrat-Plutoniumnitrat hergestelltes Pulver hat sich besonders gut bewährt. Zur besseren Einstellung des Schwermetall-Sauerstoffverhältnisses ist es vorteilhaft, als Reduktionsmittel für die reduzierende Atmosphäre Wasserstoff mit geringem Wasserdampfzusatz zu verwenden.

Im allgemeinen sind keramische Werkstoffe mit geringer Wärmeleitfähigkeit wesentlich mehr thermoschockempfindlich als Metalle bzw. Metallegierungen. Die Thermoschockempfindlichkeit ist bei den $UO_2$- bzw. $UO_2/PuO_2$-Brennstofftabletten im Temperaturbereich unterhalb 1200°C besonders stark ausgeprägt. Die Optimierungsversuche mit $UO_2$- und $UO_2/PuO_2$-Tabletten ergaben, daß die Aufheiz- und Abkühlgeschwindigkeit im Temperaturbereich unterhalb 1200°C auf Werte zwischen 1°C und 30°C/Sekunde, vorzugsweise etwa 12°C/Sekunde, begrenzt werden sollte, während sie im Temperaturbereich oberhalb 1200°C von 30°C bis auf 100°C/Sekunde, vorzugsweise etwa 50°C/Sekunde, angehoben werden kann, ohne daß dabei Risse durch unzulässig hohe thermische Spannungen entstehen. Durch die erhöhte Aufheizgeschwindigkeit wird die Verweilzeit der Tabletten im oberen Temperaturbereich verkürzt und somit die bereits durch den Druck der reduzierenden Atmosphäre unterdrückte Verdampfung der Oxide zusätzlich verringert.

Folgende Beispiele sollen das erfindungsgemäße Verfahren näher erläutern:

## Beispiel 1

Herstellung von $UO_2$-Brennstofftabletten

Als Ausgangspulver für die Tablettenherstellung diente zerkleinerter $UO_2$-Sinterschrott mit einer Körnung d < 63 µm, einer BET-Oberfläche von 0,1 $m^2/g$, einer Schüttdichte von 4,2 $g/cm^3$ und einem O/U-Verhältnis von 2,01. Aus dem Pulver wurden bei einem Preßdruck von 450 $MN/m^2$ Tabletten mit 8,6 mm Höhe und 5,9 mm Durchmesser gepreßt. Die Dichte der Tablettenrohlinge betrug 8,8 $g/cm^3$, was einem theoretischen Dichtewert von 80,3 % entspricht. Die Tablettenrohlinge wurden in einer Helium/Wasserstoff-Atmosphäre mit 500 ppm Wasserdampfzusatz auf 2200°C erhitzt. Der Gasdruck der reduzierenden Atmosphäre betrug 950 mbar. Im Temperaturbereich unterhalb 1200°C betrug die Aufheizgeschwindigkeit 12°C/Sekunde, während sie im oberen Temperaturbereich zwischen 1200° und 2200°C im Mittel auf 50°C/Sekunde erhöht wurde. Die auf 2200°C erhitzten Tabletten wurden bei einer Oberstempelgeschwindigkeit von 5,7 m/Sekunde in ein Kaltgesenk überführt, darin auf Enddimensionen verdichtet und ausgestoßen. Sie fielen dabei durch einen Ofen, in dem sie kontrolliert abgekühlt wurden, wobei die Abkühlgeschwindigkeit oberhalb 1200°C bei

50°/Sekunde, unterhalb 1200°C bei 20°C/Sekunde lag.

Der Druck-Zeit-Verlauf des Verdichtungsvorganges wurde mit Hilfe von Dehnungsmeßstreifen, die an einem Meßverstärker und Oszillographen angeschlossen waren, bestimmt. Die Dehnungsmeßstreifen waren dabei an der Unterstempelaufnahme befestigt. Bei einem Maximaldruck von 450 MN/m²betrug die Verdichtungsdauer 1,2 Millisekunden. Die auf Raumtemperatur abgekühlten Tabletten hatten einen Durchmesser von 5,86 mm und eine Höhe von 7,3 mm. Die Dichte betrug 10,54 g/cm³, was 96,17 % th. Dichte entspricht.

Das O/U-Verhältnis lag bei 2,00. Sie waren rißfrei, und ihre Gewichtsabnahme lag unter der Meßgenauigkeit von etwa 0,1 µg.

**Beispiel 2**

Herstellung von $UO_2$-$PuO_2$-Brennstofftabletten
Das Preßpulvergemisch wurde durch thermische Zersetzung von Uranylnitrat-Plutoniumnitratlösung und anschließende Kalzination und Reduktion der Schwermetalloxide zu $UO_2$-$PuO_2$-Pulver hergestellt. Bei einem U/Pu-Verhältnis von 70 : 30 betrug die Schwermetallkonzentration der Uranyl-Plutonium-Nitratlösung 400 g/l. Bis auf die Herabsetzung der Preßtemperatur beim Heißschlagverdichten auf 2000°C blieben alle übrigen Herstellungsschritte gegenüber Beispiel 1 unverändert. Die fertigen Tabletten hatten einen Durchmesser von 5,88 mm und eine Höhe von 7,8 mm.

Die Dichte betrug 10,1 g%cm³, was einer th. Dichte von 93,6 % entspricht. Auch diese Tabletten waren rißfrei. Eine Gewichtsabnahme konnte nicht festgestellt werden. Die Auflöseversuche in 6 n $HNO_3$ nach Standardbedingungen ergaben eine sehr gute Löslichkeit. Sie betrug 99,98 Gew.-%, bezogen auf $PuO_2$.

**Patentansprüche**

1. Verfahren zur Herstellung von keramischen Brennstofftabletten, die den Spalt- und/oder Brutstoff in oxidischer Form enthalten, durch Erhitzen entsprechender Rohpreßlinge auf Temperaturen unterhalb 2500°C, rasche Überführung in ein Stahlgesenk, schlagartige Verdichtung bei einem Preßdruck kleiner als 1000 MN/m² innerhalb weniger Millisekunden, Ausstoßung der Tabletten und Abkühlung, dadurch gekennzeichnet, daß das Aufheizen, Verdichten, Ausstoßen und Abkühlen in reduzierender Atmosphäre erfolgt und das Aufheizen und Abkühlen stufenweise durchgeführt wird, wobei die Aufheiz- und Abkühlgeschwindigkeit unterhalb 1200°C kleiner als 30°C/Sekunde und oberhalb 1200°C größer als 30°C/Sekunde ist.

2. Verfahren nach Anspruch 1, dadurch gekennzeichnet, daß der Gasdruck in der reduzierenden Atmosphäre zwischen 10 und 1000 mbar beträgt.

3. Verfahren nach Ansprüchen 1 und 2, dadurch gekennzeichnet, daß der Gasdruck in der reduzierenden Atmosphäre etwa 950 mbar beträgt.

4. Verfahren nach Ansprüchen 1 bis 3, dadurch gekennzeichnet, daß die reduzierende Atmosphäre aus Inertgas und Wasserstoff besteht.

5. Verfahren nach Ansprüchen 1 bis 4, dadurch gekennzeichnet, daß die reduzierende Atmosphäre aus einem Helium-Wasserstoff-Gemisch mit 4 bis 10 Vol.-% Wasserstoff besteht.

6. Verfahren nach Ansprüchen 1 bis 5, dadurch gekennzeichnet, daß dem Inertgas-Wasserstoffgemisch zusätzlich Wasserdampf zugesetzt wird.

7. Verfahren nach Ansprüchen 1 bis 6, dadurch gekennzeichnet, daß die Aufheiz- und Abkühlgeschwindigkeit bis 1200°C etwa 12°C/Sekunde und oberhalb 1200°C etwa 50°C/Sekunde beträgt.

**Claims**

1. A process for the production of ceramic fuel tablets which contain the fission material and/or fertile material in oxidic form, by heating suitable crude pressed parts to temperatures below 2,500°C, rapid transfer into a steel die, sudden compaction with a pressure of less than 1000 MN/m² within a few milliseconds, ejection of the tablets and cooling, characterised in that the heating, compaction, ejection and cooling take place in a reducing atmosphere and the heating and cooling are carried out in stages, wherein the heating and cooling rate are less than 30°C per second below 1,200°C and greater than 30°C per second above 1,200°C.

2. A process according to Claim 1, characterised in that the gas pressure in the reducing atmosphere is between 10 and 1,000 mbar.

3. A process according to Claims 1 and 2, characterised in that the gas pressure in the reducing atmosphere is about 950 mbar.

4. A process according to Claims 1 to 3, characterised in that the reducing atmosphere is composed of inert gas and hydrogen.

5. A process according to Claims 1 to 4, characterised in that the reducing atmosphere is composed of a helium- hydrogen mixture containing from 4 to 10 % by volume of hydrogen.

6. A process according to Claims 1 to 5, characterised in that water vapour is additionally added to the inert gas-hydrogen mixture.

7. A process according to Claims 1 to 6, characterised in that the heating and cooling rate is about 12°C per second at up to 1,200°C and about 50°C per second at above 1,200°C.

## Revendications

1. Procédé pour la fabrication de tablettes de combustible nucléiare céramiques qui contiennent la matière fissile et/ou fertile sous la forme d'oxyde par chauffage d'ébauches brutes appropriées à des temperatures inférieures à 2500°C, transfert rapide dans une matrice en acier, compactage par frappe sous une pression inférieure à 1000 MN/m² en l'espace de quelques millisecondes, éjection des tablettes et refroidissement, procédé caractérisé en ce que les chauffage, compactage, éjection, et refroidissement s'effectuent sous atmosphère réductrice, et que le chauffage et le refroidissement sont effectués par étapes, les vitesses de chauffage et de refroidissement, en-dessous de 1200°C, étant inférieures à 30°C/seconde et, au-dessus de 1200°C supérieures à 30°C/seconde.

2. Procédé suivant la revendication 1, caractérisé en ce que la pression de gaz dans l'atmosphère réductrice est de 10 à 1000 mbar.

3. Procédé suivant les revendications 1 et 2, caractérisé en ce que la pression de gaz dans l'atmosphère réductrice est d'environ 950 mbars.

4. Procédé suivant les revendications 1 à 3, ccaractérisé en ce que l'atmosphère réductrice est constituée d'un gaz inerte et d'hydrogène.

5. Procédé suivant les revendications 1 à 4, caractérisé en ce que l'atmosphère réductrice est constituée par un mélange hélium-hydrogène avec 4 à 10 % en volume d'hydrogène.

6. Procédé suivant les revendications 1 à 5, caractérisé en ce qu'au mélange gaz inerte-hydrogène, il est ajouté supplémentairement de la vapeur d'eau.

7. Procédé suivant les revendications 1 à 6, caractérisé en ce que les vitesses de chauffage et de refroidissement sont, jusqu'à 1200°C, d'environ 12°C/seconde, et au-dessus de 1200°C, d'environ 50°C/seconde.